# EUROPEAN PATENT APPLICATION

(11) **EP 3 166 192 A1**
(43) Date of publication of application: **10.05.2017**
(21) Application number: 15814566.4
(22) Date of filing: 01.07.2015
(51) Int. Cl.: H02H 3/16, H02H 7/18, H02J 7/00

(54) **LEAKAGE PROTECTION DEVICE AND LEAKAGE PROTECTION SYSTEM**

(30) Priority: 02.07.2014 JP 2014136988
(71) Applicant: Panasonic Intellectual Property Management Co., Ltd., Osaka-shi, Osaka 540-6207 (JP)
(72) Inventor: KANDA, Masataka, Osaka-shi, Osaka 540-6207 (JP); YAMAGUCHI, Kenji, Osaka-shi, Osaka 540-6207 (JP)
(74) Representative: Appelt, Christian W.
(86) International application number: PCT/JP2015/003309
(87) International publication number: WO 2016/002218

(57) **Abstract**

A fault detector (11) detects the occurrence of a fault in a conductor path (7). A controller (12) controls open and close states of each of a first switch (61) in the conductor path (7) and a second switch (62) on a nearer side to a storage battery (21) than the first switch (61) in the conductor path (7) based on a detection result by the fault detector (11). The controller (12) operates at least the first switch (61) in an open state when the fault detector (11) detects the occurrence of the fault during charging of the storage battery (21), and operates at least the second switch (62) in an open state when the fault detector detects the occurrence of the fault during discharging of the storage battery (21).

## Description

### Technical Field

The invention relates generally to residual current protection devices and residual current protection systems with the same and, more particularly, to a residual current protection device configured to provide residual current protection when the occurrence of a fault is detected, and a residual current protection system with the same.

### Background Art

As a related example, there is a V2H (Vehicle to Home) system by which a storage battery (a battery) which an electric vehicle is equipped with is utilized as a dispersed power source. With the V2H system, it is possible to supply a household appliance load with (electric) power other than power for driving a vehicle, for example. The storage battery can be also recharged by night (off-peak) time power.

As another related technology for residual current protection, it has been disclosed to stop charging a storage battery which a vehicle is equipped with when detecting the occurrence of a fault (a ground fault) during charging, thereby providing residual current protection (for example, see JP 5369833 (hereinafter referred to as "Document 1")).

However, in the technology described in Document 1, the V2H system is left out of consideration, and no residual current protection would be provided during discharging of the storage battery.

### Summary of Invention

The present invention has been achieved in view of the above circumstances, and an object thereof is to provide a residual current protection device capable of providing residual current protection when detecting the occurrence of a (ground) fault during charging and discharging of a storage battery, and a residual current protection system with the same.

A residual current protection device (1) of the present invention includes: a fault detector (11) configured to detect the occurrence of a fault in a conductor path (7) that allows (electric) power to be transmitted between a storage battery (21) and an utility grid (3); and a controller (12) configured to control open and close states of each of a first switch (61) in the conductor path (7) and a second switch (62) on a nearer side to the storage battery (21) than the first switch (61) in the conductor path (7) based on a detection result by the fault detector (11). The controller (12) is configured to: when the fault detector (11) detects the occurrence of the fault during charging of the storage battery (21), operate at least the first switch (61) of the first and second switches (61, 62) in an open state; and when the fault detector (11) detects the occurrence of the fault during discharging of the storage battery (21), operate at least the second switch (62) of the first and second switches (61, 62) in an open state.

A residual current protection system (10) of the present invention includes: the residual current protection device (1); the first switch (61) in the conductor path (7); and the second switch (62) on the nearer side to the storage battery (21) than the first switch (61) in the conductor path (7).

According to the present invention, it is possible to provide residual current protection when a fault is detected during charging and discharging of the storage battery.

### Brief Description of Drawings

The figures depict one or more implementations in accordance with the present teaching, by way of example only, not by way of limitation. In the figures, like reference numerals refer to the same or similar elements where:
FIG. 1 is a schematic diagram of a residual current protection device and a residual current protection system, in accordance with Embodiment 1;
FIG. 2 shows a flow of current when a fault occurs during charging;
FIG. 3 shows another flow of current when a fault occurs during discharging;
FIG. 4 is a schematic diagram of a residual current protection device and a residual current protection system, in accordance with a first modified example of Embodiment 1;
FIG. 5 is a schematic diagram of a residual current protection device and a residual current protection system, in accordance with a second modified example of Embodiment 1;
FIG. 6 is a schematic diagram of a residual current protection device and a residual current protection system, in accordance with Embodiment 2;
FIG. 7 illustrates a modified example of FIG. 1; and
FIG. 8 illustrates a modified example of FIG. 4.

### Description of Embodiments

Embodiments of the present invention will be hereinafter explained with reference to drawings.

### (Embodiment 1)

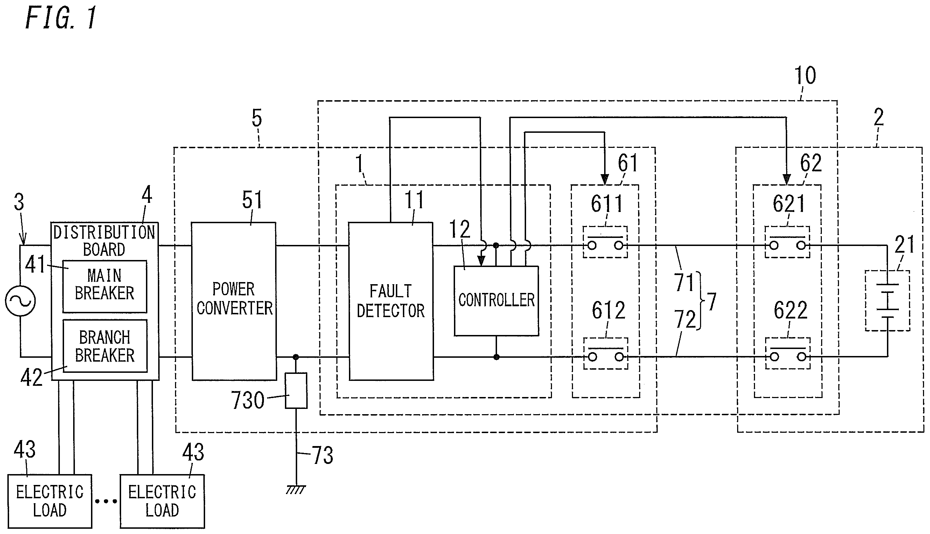

FIG. 1 shows a schematic configuration of a residual current protection device 1 and a residual current protection system 10 with the same, in the present embodiment. In the embodiment as explained below, the residual current protection system 10 (residual current protection device 1) is applied to a V2H (Vehicle to Home) system for supplying one or more electric loads 43 for household with discharge power from a storage battery 21 (a battery) which a vehicle 2 (an electric vehicle) is equipped with. In the embodiment, each of the residual current protection device 1 and the residual current protection system 10 is configured to provide residual current protection when detecting the occurrence of a fault during charging and discharging of the storage battery 21. However, in the embodiment, respective residual current protection by the residual current protection device 1 and the residual current protection system 10 is not limited to during charging and discharging of the storage battery 21 of the vehicle 2 applied to the V2H system. For example, the respective residual current protection may be applied to during charging and discharging of a storage battery of a stationary storage device.

The schematic configuration of the V2H system will be first explained with reference to FIG. 1.

Dwelling facilities are provided with a distribution board 4 that includes a main breaker 41 electrically connected to a utility grid (an AC (alternating current) power supply) 3, and branch breakers 42 each of which allows an electric load(s) 43 to be electrically connected to. The electric loads 43 can be accordingly supplied with AC power from the utility grid 3 via the distribution board 4 (the main breaker 41 and branch breakers 42).

One of the branch breakers 42 in the distribution board 4 may be electrically connected to a power conversion device 5. The power conversion device 5 includes a power converter 51 configured to be electrically connected to the utility grid 3 via the distribution board 4. The power converter 51 may be comprised of a power conversion circuit configured to convert AC power from the utility grid 3 into DC power. The power converter 51 may be electrically connected to the storage battery 21 which the vehicle 2 is equipped with, via a fault detector 11 and first and second switches 61 and 62 to be described later. The DC power generated through the power converter 51 is supplied to the storage battery 21. As a result, the storage battery 21 is charged.

Not only power stored in the storage battery 21 are available for driving the vehicle 2 (electric vehicle) but also surplus power thereof are available to one or more electric loads 43 for household. For example, the storage battery 21 may charge during off-peak hours (night time) at lower electricity rates, and discharge during peak hours (day time) at higher electricity rates to supply its power to one or more electric loads 43, thereby reducing an electricity bill.

The power converter 51 may be a bidirectional power converter for supplying power from the storage battery 21 to one or more electric loads 43. The power converter 51 may be connected to the utility grid 3 via the distribution board 4 and configured to convert DC (direct current) power as discharge power from the storage battery 21 into AC power to supply the AC power to the electric load(s) 43 via the distribution board 4.

Thus, the storage battery 21 and the distribution board 4, specifically the storage battery 21 and the utility grid 3 are electrically connected via a conductor path 7 comprised of two conductors, which allows power to be transmitted between the storage battery 21 and the utility grid 3. Note that the two conductors constituting the conductor path 7 include a high potential side conductor 71 on a high potential side, and a low potential side conductor 72 on a low potential side.

The configuration of the residual current protection device 1 and residual current protection system 10 will be explained below.

In the present embodiment, the residual current protection device 1 includes the fault detector 11 and a controller 12, while the residual current protection system 10 includes the residual current protection device 1 and the first and second switches 61 and 62.

The first switch 61 may be provided in the conductor path 7 within the power conversion device 5 and configured to open (cut off) and close (conduct) the conductor path 7 in response to open and close states. For example, the first switch 61 includes two contacts (a first high potential side contact 611 and a first low potential side contact 612) provided at the high potential side conductor 71 and low potential side conductor 72, respectively. The first high potential side contact 611 is configured to close the high potential side conductor 71 in the close state, and open the high potential side conductor 71 in the open state. The first low potential side contact 612 is configured to close the low potential side conductor 72 in the close state, and open the low potential side conductor 72 in the open state. The controller 12 of the residual current protection device 1 is configured to control the open and close states of the first switch 61 (the first high potential side contact 611 and first low potential side contact 612), and to operate it in the close state during normal time when no fault occurs.

The second switch 62 is provided in the conductor path 7 within the vehicle 2 and configured to open and close the conductor path 7 in response to the open and close states. For example, the second switch 62 includes two contacts (a second high potential side contact 621 and a second low potential side contact 622) provided at the high potential side conductor 71 and low potential side conductor 72, respectively. The second high potential side contact 621 is configured to close the high potential side conductor 71 in the close state, and open the high potential side conductor 71 in the open state. The second low potential side contact 622 is configured to close the low potential side conductor 72 in the close state, and open the low potential side conductor 72 in the open state. The controller 12 of the residual current protection device 1 is configured to control the open and close states of the second switch 62 (the second high potential side contact 621 and second low potential side contact 622), and to operate it in the close state during the normal time when no fault occurs.

The residual current protection device 1 may be provided in the power conversion device 5. The fault detector 11 is configured to detect the occurrence of a fault in the conductor path 7. The controller 12 is configured to control the open and close states of each of the first and second switches 61 and 62 based on a detection result by the fault detector 11.

For example, the fault detector 11 is configured to detect the occurrence of a fault in the conductor path 7 based on current flowing through the conductor path 7. Specifically, the fault detector 11 is comprised of, for example a current sensor. It may be configured to detect balance or unbalance between current flowing through the high potential side conductor 71 and current flowing through the low potential side conductor 72, thereby detecting the occurrence of a fault in the conductor path 7. Examples of the current sensor include a fluxgate type one and a Hall element type one.

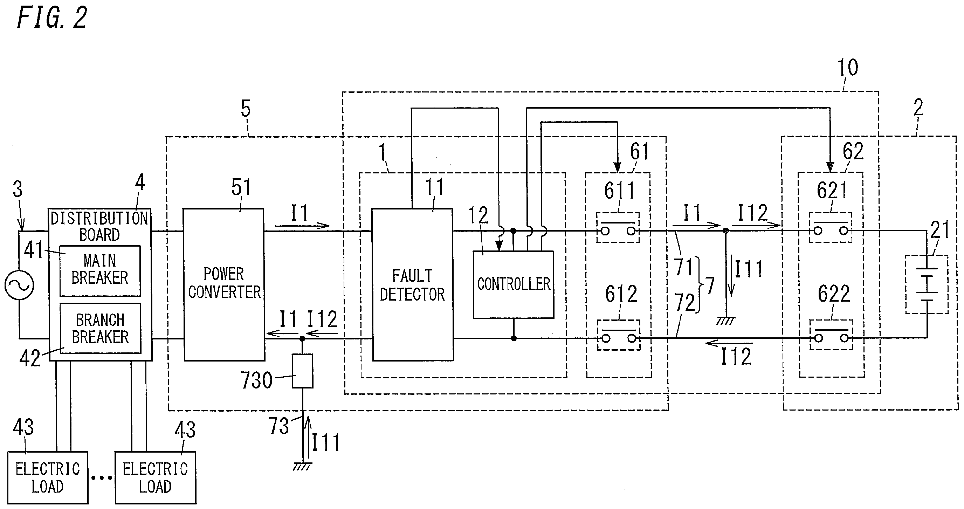

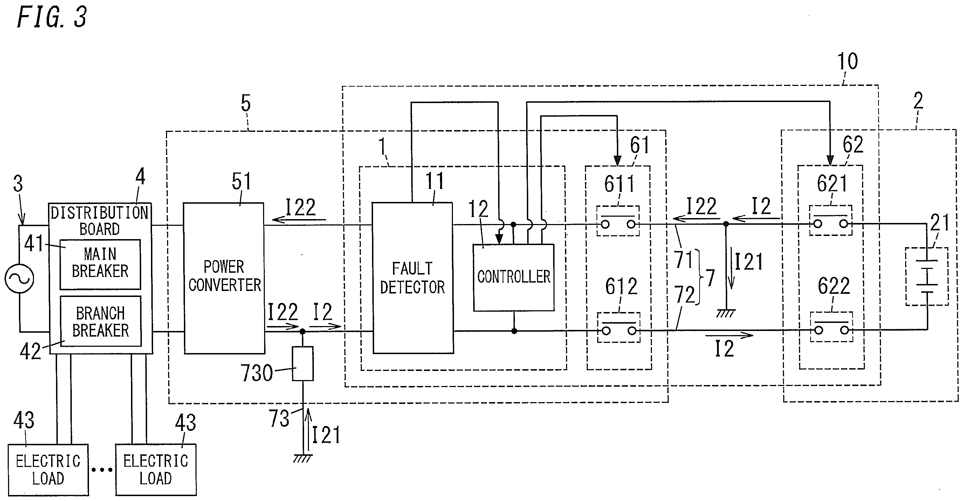

In the embodiment, the low potential side conductor 72 is electrically connected to earth (ground) via an impedance circuit 730 and an earthing (grounding) conductor 73. For example, the impedance circuit 730 is a high impedance resistor. Preferably, it is a resistor of 40kΩ or more. In a specific example, a first end of the earthing conductor 73 is connected a position between the power converter 51 and the fault detector 11 in the low potential side conductor 72 via the impedance circuit 730. In short, the fault detector 11 of the power conversion device 5 is provided at a nearer side to the storage battery 21 than a junction of the conductor path 7 and a side of earth. The fault detector 11 may be configured to detect the occurrence of a fault in the conductor path 7 between the fault detector 11 and the storage battery 21. The detection of the fault by the fault detector 11 will be hereinafter explained with reference to FIGS. 2 and 3.

FIG. 2 is referenced in explanation of a flow of current when a fault occurs during charging of the storage battery 21. In FIG. 2, each arrow shows a flow of current.

In the figure, I1 shows current (DC current) to be output from the power converter 51. In an example, when no fault occurs in the conductor path 7, current I1 flows through the high potential side conductor 71 and low potential side conductor 72. Accordingly, the current I1 is supplied to the storage battery 21. In this example, the current flowing through the high potential side conductor 71 and the current flowing through the low potential side conductor 72 are balanced on a current detection place of the fault detector 11. The fault detector 11 therefore judges that no fault occurs.

On the other hand, a fault may occur in the conductor path 7 between the power conversion device 5 and the vehicle 2, specifically in the high potential side conductor 71 (see FIG. 2). In this case, the fault causes current I1 to be output from the power converter 51 containing current I11 as part thereof to flow into earth and current I12 (=I1 - I11) as the remains to be supplied to the storage battery 21. Such leakage current I11 from the high potential side conductor 71 to earth flows back into the low potential side conductor 72 via the earthing conductor 73 and the impedance circuit 730. In short, the current I11 flows back into the low potential side conductor 72 between the fault detector 11 and the power converter 51. Therefore, at the current detection place of the fault detector 11, I1 is current flowing through the high potential side conductor 71, whereas I12 (=I1 - I11) is current flowing through the low potential side conductor 72. In this example, the current flowing through the high potential side conductor 71 and the current flowing through low potential side conductor 72 are unbalanced on the current detection place of the fault detector 11. The fault detector 11 therefore judges that a fault occurs.

FIG. 3 is referenced in explanation of a flow of current when a fault occurs during discharging of the storage battery 21. In FIG. 3, each arrow shows a flow of current.

In the figure, I2 shows current (DC current) to be output from the storage battery 21. In an example, when no fault occurs in the conductor path 7, current I2 flows through the high potential side conductor 71 and low potential side conductor 72. Accordingly, the current I2 is supplied to the power converter 51. In this example, the current flowing through the high potential side conductor 71 and the current flowing through low potential side conductor 72 are balanced on the current detection place of the fault detector 11. The fault detector 11 therefore judges that no fault occurs.

On the other hand, a fault may occur in the conductor path 7 between the power conversion device 5 and the vehicle 2, specifically in the high potential side conductor 71 (see FIG. 3). In this case, the fault causes current I2 to be output from the power converter 51 containing current I21 as part thereof to flow into earth and current I22 (=I2 - I21) as the remains to be supplied to the power converter 51. Such leakage current I21 from the high potential side conductor 71 to earth flows back into the low potential side conductor 72 via the earthing conductor 73 and the impedance circuit 730. In short, the current I21 flows back into the low potential side conductor 72 between the power converter 51 and the fault detector 11. Therefore, at the current detection place of the fault detector 11, I22 (=I2 - I21) is current flowing through the high potential side conductor 71, whereas I2 is current flowing through the low potential side conductor 72. In this example, the current flowing through the high potential side conductor 71 and the current flowing through low potential side conductor 72 are unbalanced on the current detection place of the fault detector 11. The fault detector 11 therefore judges that a fault occurs.

Thus, the fault detector 11 can detect the occurrence of the fault in the conductor path 7 during charging and discharging of the storage battery 21.

As shown in FIG. 1, the controller 12 may be configured to communicate with the first and second switches 61 and 62 and also to control the open and close states of the first and second switches 61 and 62. In the embodiment, the controller 12 are connected to the first and second switches 61 and 62 via first and second communication lines as, e.g., exclusive lines, respectively. It may be configured to supply respective control signals via the first and second communication lines, thereby individually controlling the open and close states of each of the first and second switches 61 and 62. However, the communication method between the controller 12 and the first and second switches 61 and 62 is not limited thereto. Examples thereof may further include power-line communication (PLC) using the conductor path 7, and wireless communication.

The controller 12 may be configured to control the open and close states of each of the first and second switches 61 and 62 based on a detection result by the fault detector 11.

In a specific example, the controller 12 may switch the first switch 61 from the close state to the open state when the fault detector 11 detects the occurrence of a fault during charging of the storage battery 21. Here, during charging of the storage battery 21, the first switch 61 operates on an upstream side of current flowing through the conductor path 7 (see FIG. 2). Therefore, the first switch 61 becomes the open state and the conductor path 7 is opened, thereby providing residual current protection for stopping the supply of the current to the occurrence position of the fault. In short, it is possible to stop a flow of the leakage current passing through the occurrence position of the fault.

On the other hand, the controller 12 may switch the second switch 62 from the close state to the open state when the fault detector 11 detects the occurrence of a fault during discharging of the storage battery 21. Here, during discharging of the storage battery 21, the second switch 62 operates on an upstream side of current flowing through the conductor path 7 (see FIG. 3). Therefore, the second switch 62 becomes the open state and the conductor path 7 is opened, thereby providing residual current protection for stopping the supply of the current to the occurrence position of the fault. In short, it is possible to stop a flow of the leakage current passing through the occurrence position of the fault.

Thus, the residual current protection device 1 according to the embodiment includes the fault detector 11 and controller 12. The fault detector 11 is configured to detect the occurrence of a fault in the conductor path 7 that allows power to be transmitted between the storage battery 21 and the utility grid 3. The controller 12 is configured to control the open and close states of each of the first switch 61 in the conductor path 7 and the second switch 62 on a nearer side to the storage battery 21 than the first switch 61 in the conductor path 7, based on a detection result by the fault detector 11. In a specific example, the controller 12 may be configured to operate at least the first switch 61 of the first and second switches 61 and 62 in the open state when the fault detector 11 detects the occurrence of a fault during charging of the storage battery 21. The controller 12 may be also configured to operate at least the second switch 62 of the first and second switches 61 and 62 in the open state when the fault detector 11 detects the occurrence of a fault during discharging of the storage battery 21.

The residual current protection system 10 according to the embodiment includes the residual current protection device 1, the first switch 61 in the conductor path 7, and the second switch 62 on a nearer side to the storage battery 21 than the first switch 61 in the conductor path 7. In the example of FIG. 1, an intermediate conductor path as part of the conductor path 7 is electrically connected between the first and second switches 61 and 62. That is, in addition to the intermediate conductor path, the conductor path 7 includes a first conductor path electrically connected between the power converter 51 and the first switch 61, and a second conductor path electrically connected between the second switch 62 and the storage battery 21.

In short, each of the residual current protection device 1 and residual current protection system 10 according to the embodiment operates, in the open states, one of the first and second switches 61 and 62, on an upstream side of the current flowing through the conductor path 7 in response to charging and discharging of the storage battery 21. Specifically, when a fault occurs during charging of the storage battery 21, the first switch 61 on the side of the utility grid 3 becomes the open state, and the conductor path 7 is opened on the upstream side of the current flowing through the conductor path 7, thereby providing residual current protection. On the other hand, when a fault occurs during discharging of the storage battery 21, the second switch 62 on the side of the storage battery 21 becomes the open state, and the conductor path 7 is opened on the upstream side of the current, thereby providing residual current protection. Thus, each of the residual current protection device 1 and residual current protection system 10 according to the embodiment opens (cuts off) the conductor path 7 on the upstream side of the current flowing through the conductor path 7 in response to charging and discharging of the storage battery 21, when a fault occurs in the conductor path 7. Thus, each of the residual current protection device 1 and residual current protection system 10 according to the embodiment can provide residual current protection regardless of charging and discharging of the storage battery 21. It is accordingly possible to improve safety and prevent the damage to appliances.

In the embodiment, the residual current protection device 1 is built in the power conversion device 5, but may be provided separately from the power conversion device 5. The first switch 61 is built in the power conversion device 5, but may be provided separately from the power conversion device 5. The second switch 62 is built in the vehicle 2, but may be provided separately from the vehicle 2.

As explained above, the controller 12 operates only one of the first and second switches 61 and 62 in the open state in response to charging and discharging of the storage battery 21 when the fault detector 11 detects the occurrence of a fault, but is not limited to this. The controller 12 may be configured to sequentially operate the first and second switches 61 and 62 in the open state when the fault detector 11 detects the occurrence of a fault. Thus, if the first and second switches 61 and 62 sequentially operate in the open state, the conductor path 7 is opened on upstream and downstream sides of the current flowing through the conductor path 7. It is accordingly possible to provide protection more securely and further improve safety.

The controller 12 may be configured to operate the first and second switches 61 and 62 in the open state in predetermined order in response to charging and discharging of the storage battery 21. The controller 12 may operate the first switch 61 in the open state and then operate the second switch 62 in the open state, when the fault detector 11 detects the occurrence of a fault during charging of the storage battery 21. The controller 12 may also operate the second switch 62 in the open state and then operate the first switch 61 in the open state, when the fault detector 11 detects the occurrence of a fault during discharging of the storage battery 21.

Thus, the embodiment preferentially operates, in the open state, one of the first and second switches 61 and 62 on an upstream side of the current flowing through the conductor path 7 in response to charging and discharging of the storage battery 21, thereby cutting off the conductor path 7. It is accordingly possible to provide residual current protection more quickly. The embodiment also operates, in the open state, one of the first and second switches 61 and 62 on a downstream side of the current flowing through the conductor path 7, and can provide residual current protection more securely and further improve safety.

The controller 12 may be configured to, when the fault detector 11 detects the occurrence of a fault, operate both the first and second switches 61 and 62 in the open state at the same time. Even in this case, the conductor path 7 is opened on upstream and downstream sides of the current flowing through the conductor path 7 like the above. It is accordingly possible to provide protection more securely and further improve safety.

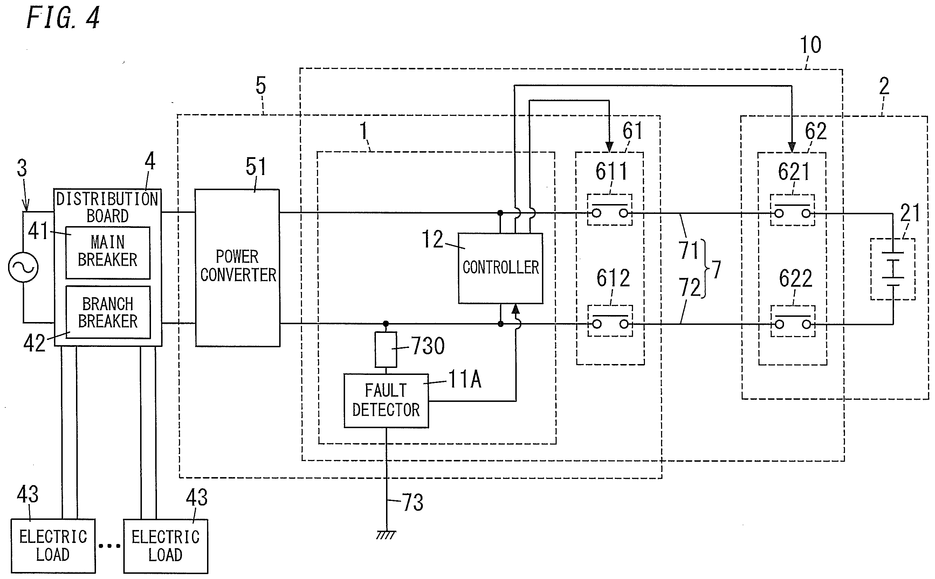

A first modified example of the embodiment is next explained with reference to FIG. 4. In the modified example, a fault detector 11A is configured to detect the occurrence of a fault in a conductor path 7 based on current flowing through an earthing conductor 73 that electrically connects the conductor path 7 (a low potential side conductor 72) and earth via an impedance circuit 730.

The fault detector 11A may be composed of a current sensor of a fluxgate type or a Hall element type, for example. It is configured to detect the occurrence of current flowing through the impedance circuit 730 and the earthing conductor 73. As explained with reference to FIGS. 2 and 3, when a fault occurs in the conductor path 7, current flowing from a high potential side conductor 71 into earth flows back into the low potential side conductor 72 via the earthing conductor 73 and the impedance circuit 730. That is, no current flows through the impedance circuit 730 and the earthing conductor 73 when no fault occurs, but current flows through the impedance circuit 730 and the earthing conductor 73 when a fault occurs. Therefore, the fault detector 11A may be configured to detect (measure) current flowing through the impedance circuit 730 and the earthing conductor 73, and to judge that a fault occurs when a detection result is a threshold or more.

Current flowing through the earthing conductor 73 is smaller than those of the high potential side conductor 71 and low potential side conductor 72. Therefore, a diameter of the earthing conductor is also smaller than those of the high potential side conductor and low potential side conductor. The aforementioned fault detector 11 has a configuration in which two conductors (the high potential side conductor 71 and low potential side conductor 72) are inserted into a core (see FIG. 1), but the fault detector 11A has a configuration in which only one conductor (earthing conductor 73) is inserted into a core. Therefore, the fault detector 11A of the modified example can be miniaturized in comparison with the fault detector 11.

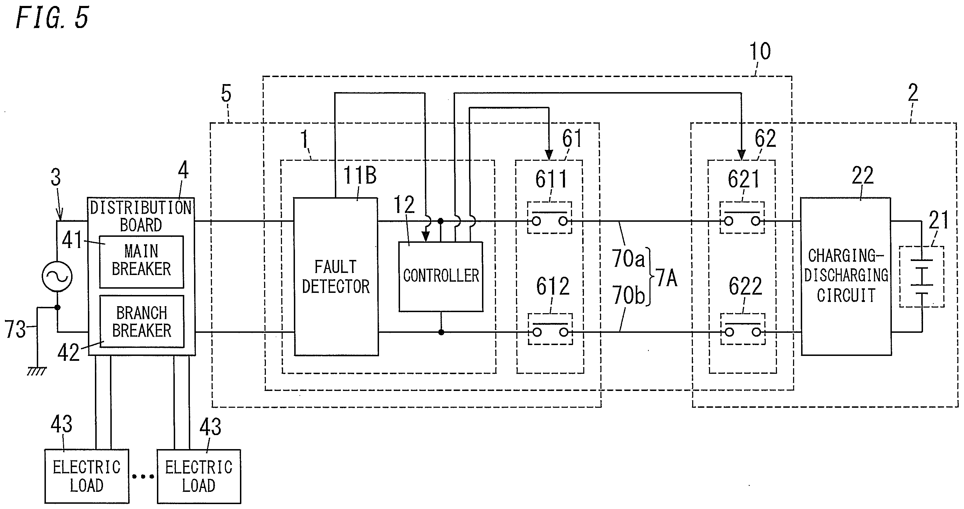

A second modified example of the embodiment is next explained with reference to FIG. 5. In the modified example, a charging and discharging circuit 22 is electrically connected to a storage battery 21 instead of the aforementioned power converter 51, in which power conversion is performed through the charging and discharging circuit 22. The charging and discharging circuit 22 is electrically connected between a second switch 62 and the storage battery 21. The charging and discharging circuit 22 may be configured to convert AC power from a utility grid 3 into DC power to supply the DC power to the storage battery 21, thereby performing AC-DC conversion. The charging and discharging circuit may be also configured to convert DC power from the storage battery 21 into AC power to supply the AC power to an electric load(s) 43, thereby performing DC-AC conversion. Therefore, in the modified example, two conductors 70a and 70b constitute a conductor path 7A for transmitting AC power. The conductor 70b is electrically connected to earth via an earthing conductor 73. In a specific example, a neutral conductor on a secondary side of a pole transformer (a distribution transformer) is connected to earth via the earthing conductor 73. In addition to the intermediate conductor path, the conductor path 7A may include a first conductor path electrically connected between a distribution board 4 and a first switch 61, and a second conductor path electrically connected between the second switch 62 and the storage battery 21.

In the modified example, a fault detector 11B is comprised of a current sensor that includes a current transformer (CT). It is configured to detect balance or unbalance between respective current flowing through the two conductors 70a and 70b constituting the conductor path 7A, thereby detecting the occurrence of a fault in the conductor path 7A, specifically the conductor 70a. The method for detecting the occurrence of the fault by the fault detector 11B is the same way as that by the fault detector 11, and description thereof is therefore omitted.

With the modified example, the residual current protection device 1 can detect the occurrence of a fault in the conductor path 7A for transmitting AC power. The residual current protection device 1 may open the conductor path 7A on an upstream side of the current flowing through the conductor path 7A in response to charging and discharging of the storage battery 21 when a fault occurs in the conductor path 7A. Thus, the residual current protection device 1 in the modified example can provide residual current protection regardless of charging and discharging of the storage battery 21. It is therefore possible to improve safety and prevent the damage to appliances.

### (Embodiment 2)

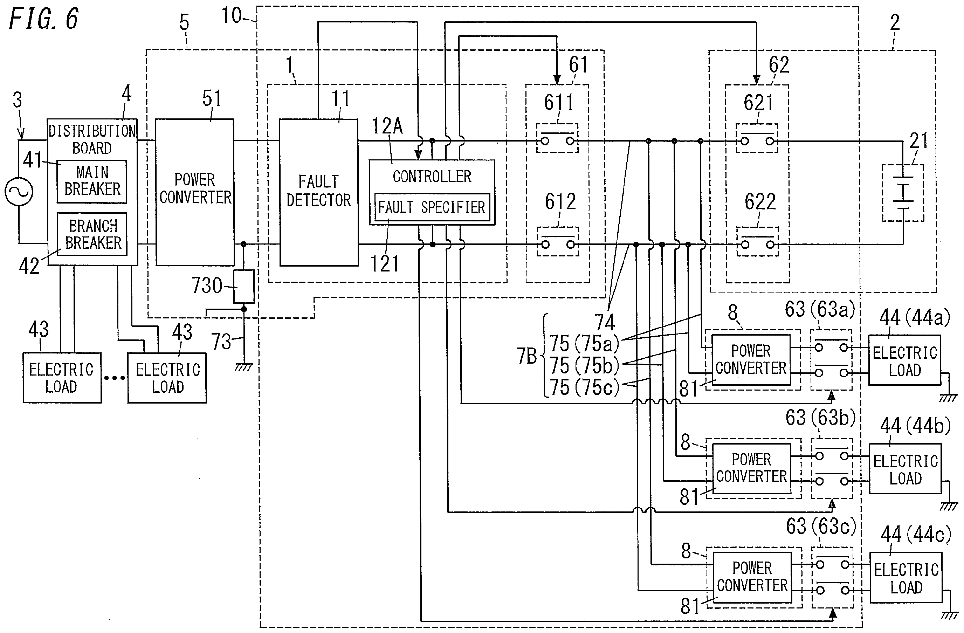

FIG. 6 shows a schematic diagram of a residual current protection device 1 and a residual current protection system 10 with the same, in accordance with the present embodiment. In the embodiment, a conductor path 7B that allows power to be transmitted between a storage battery 21 and utility grid 3 forms a main circuit 74 that allows the storage battery 21 to be electrically connected to the utility grid 3, and (a) branch circuits 75 which branch(es) off from the main circuit 74 and each of which allows an electric load(s) 44 to be connected to. A controller 12A of the embodiment is configured to control open and close states of (a) branch switches 63 in the branch circuits 75. In the example of FIG. 6, the branch circuits 75 branch off from the main circuit 74, and each of the branch circuits 75 allows an electric load 44 to be electrically connected to via a corresponding branch switch 63. Note that like elements are assigned the same reference numerals as depicted in Embodiment 1.

In the embodiment, the main circuit 74 of the conductor path 7B electrically connects the storage battery 21 and the utility grid 3. That is, the main circuit 74 is configured like the conductor path 7 in Embodiment 1. In other words, the conductor path 7 of Embodiment 1 has only the main circuit 74 of the conductor path 7B in the embodiment. Like Embodiment 1, a first switch 61 may be provided in the main circuit 74 within the power conversion device 5, and a second switch 62 may be provided in the main circuit 74 within the vehicle 2.

Each branch circuit 75 may be a circuit that branches off from the main circuit 74 between the first and second switches 61 and 62, and allow an electric load 44 configured to operate by DC power to be electrically connected to. In the embodiment, the conductor path 7B forms three branch circuits 75, and each branch circuit 75 allow an electric load 44 to be electrically connected to. Also in the embodiment, each electric load 44 allows earth to be electrically connected to. The number of the branch circuits 75 is not limited to three, but example thereof may further include one, two and four and more.

Each branch circuit 75 may be also provided with a branch switch 63 configured to open and close the branch circuit 75 in response to open and close states. Each branch switch 63 may have a configuration like the first and second switches 61 and 62, and have two contacts that are individually provided on two conductors constituting the branch circuit 75. Each branch switch 63 may be configured to communicate with the controller 12A of the residual current protection device 1, like the first and second switches 61 and 62. The controller 12A may be configured to control the open and close states of each branch switch 63, and operate it in the close state during normal time when no fault occurs.

Each branch circuit 75 may be provided with a repeater 8 that is connected to a position in front of a corresponding branch switch 63 in the branch circuit 75. Each repeater 8 may include a power converter 81 that is comprised of a DC-DC converter circuit. The power converter 81 may be configured to convert DC power from a power converter 51 of a power conversion device 5 or a storage battery 21 into a desired DC power to supply the DC power to a corresponding electric load 44. For example, in an electric load 44, even if the size of the load suddenly changes and load fluctuation occurs, a corresponding power converter 81 can suppress the influence such as voltage fluctuation and sudden current fluctuation of the conductor path 7B. In short, the power converter 81 can stabilize the quality of power supply in the conductor path 7B and suppress the influence of the load fluctuation of the electric load 44 on utility grid 3.

In the embodiment, the power converters 81 as the repeaters 8 are connected to the respective positions in front of the branch switches 63, but are not limited to the positions. What is needed is that the power converters are electrically connected between the utility grid 3 and respective electric loads 44. For example, the power converters 81 may be provided at the positions in rear of the respective branch switches 63, inside the connection plugs of the respective electric loads 44 or inside the respective electric loads 44. Alternatively, the power converter 81 may be provided in the main circuit 74 (e.g., an output stage of the power conversion device 5) so that one power converter 81 is configured to supply DC power to each electric load 44. In the case where the charging and discharging circuit 22 is provided like the second modified example of Embodiment 1 (see FIG. 5), the branch circuits 75 that branch off from the main circuit 74 may allow AC power to be transmitted through and allow respective electric loads 44 configured to operate by AC power to be connected to. In this case, the power converters 81 connected between the utility grid 3 and the respective electric loads 44 may be an AC-AC converter circuit configured to convert AC power into desired AC power.

In the embodiment, the three branch circuits 75 branch off from the main circuit 74. They are referred to as branch circuits 75a, 75b and 75c for distinction of the branch circuits 75. The branch circuit 75a is connected with a branch switch 63a and allows an electric load 44a to be connected to. The branch circuit 75b is connected with a branch switch 63b and allows an electric load 44b to be connected to. The branch circuit 75c is connected with a branch switch 63c and allows an electric load 44c to be connected to.

Like Embodiment 1, the controller 12A may be configured to operate the first and second switches 61 and 62 in the open state when a fault detector 11 detects the occurrence of a fault. The controller 12A may be further configured to operate every branch switch 63 in the open state.

In the embodiment, the conductor path 7B forms the main circuit 74 that allows the storage battery 21 to be electrically connected to the utility grid 3, and one or more branch circuits 75 which branch off from the main circuit 74 and each of which allows one or more electric loads 44 to be electrically connected to. The first switch 61 is provided in the main circuit 74. The second switch 62 is provided on a nearer side to the storage battery 21 than the first switch 61 in the main circuit 74. The controller 12A may be further configured to control the open state of the branch switches 63 in the branch circuits 75.

In the embodiment, when the fault detector 11 detects the occurrence of a fault, the controller 12A can operate not only the first and second switches 61 and 62 but also the branch switches 63 in the open state. In this case, the conductor path 7B can be opened on the upstream and downstream sides of the current flowing through the conductor path 7B (the main circuit 74 and one or more branch circuits 75). It is accordingly possible to provide residual current protection more securely and further prevent the damage to the electric loads 44.

In the embodiment, the residual current protection system 10 includes the residual current protection device 1, the first switch 61 in the main circuit 74, the second switch 62 on a nearer side to the storage battery 21 than the first switch 61 in the main circuit 74, and the power converters 81. The power converters 81 are electrically connected between the utility grid 3 and the respective electric loads 44, and configured to convert supply power from the utility grid 3 into another power to be supplied to the respective electric loads 44.

With the residual current protection system 10 of the embodiment, the power converters 81 can stabilize the quality of power supply in the conductor path 7B and suppress the influence of the load fluctuation of the electric loads 44 on the utility grid 3.

In one example, the electric load 44c may include a load for emergency (for example, an exit light, an IP phone or the like) that is operated preferentially during a power failure when power from the utility grid 3 is lost.

During the power failure, the controller 12A may be configured to maintain control of operating the second switch 62 connected to the storage battery 21 and the branch switch 63c connected to the electric load 44c (the load for emergency) in the close state, and also to operate the first switch 61 and branch switches 63a and 63b in the open state. The electric load 44c can accordingly operate because the discharge power from the storage battery 21 is supplied to the electric load 44c (the load for emergency). It is desirable that the controller 12A be configured to be supplied with power from the main circuit 74 between the first and second switches 61 and 62 because the controller 12A needs to operate continuously.

In the embodiment, the conductor path 7B includes the branch circuits 75. When power from the utility grid 3 is lost, the controller 12A operates a specified branch switch 63c of the respective branch switches 63 in the branch circuits 75 and the second switch 62 in the open state. The specified electric load 44c (the load for emergency) can accordingly operate by the storage battery 21 even during power failure.

The fault detector 11 may be provided at a position that enables the detection of the occurrence of a fault during power failure. For example, the fault detector may be provided between branch points of the branch circuits 75 and the second switch 62 in the main circuit 74, and a low potential side conductor on a nearer side to the storage battery 21 than the fault detector may be connected to earth. In this example, the occurrence of a fault can be detected even during power failure. When the fault detector detects the occurrence of a fault during power failure, the controller 12A may operate the second switch 62 and the branch switch 63c connected with the electric load 44c (the load for emergency) in the open state. In short, the controller 12A may operate the first and second switches 61 and 62 and all the branch switches 63a to 63c in the open state.

Thus, the controller 12A may operate every branch switch 63 and the second switch 62 in the open state if the fault detector 11 detects the occurrence of a fault when power from the utility grid 3 is lost. The conductor path 7B can be accordingly opened on the upstream and downstream sides of the current flowing through the conductor path 7B (the main circuit 74 and branch circuits 75). It is therefore possible to provide residual current protection more securely and further prevent the damage to the electric loads 44.

In the embodiment, the controller 12A may include a fault specifier 121 configured to specify an occurrence position of the fault. As stated above, the controller 12A may operate the first and second switches 61 and 62 and each branch switch 63 in the open state when the fault detector 11 detects the occurrence of a fault. The controller 12A may then sequentially control the open and close states of each of the first and second switches 61 and 62 and each branch switch 63 so as to make different open-close state combinations of the first switch 61, second switch 62 and each branch switch 63. The controller 12A may then specify the occurrence position of the fault based on a detection result by the fault detector 11 and the open-close state combinations of the first switch 61, second switch 62 and each branch switch 63.

The fault specifier 121 may judge that the occurrence position of the fault is on a route of current flowing via (a) switches in the close state. For example, the fault detector 11 may detect the occurrence of a fault when only the first switch 61 is in the close state and the second switch 62 and each branch switch 63 are in the open state. In this case, the fault specifier 121 can specify that a fault occurs in the conductor path 7B between the first switch 61 and both the second switch 62 and each branch switch 63. Desirable, the controller 12A then operates the first and second switches 61 and 62 and each branch switch 63 in the open state, thereby providing residual current protection.

On the other hand, the fault specifier 121 can judge that the fault occurs at any of the vehicle 2 and each electric load 44 if the fault detector 11 detects no fault when only the first switch 61 is the close state and the second switch 62 and each branch switch 63 are in the open state. In this case, the controller 12A may sequentially operate the second switch 62 and each branch switch 63 in the close state one by one while maintaining control of operating the first switch 61 in the close state. In an example in which the fault occurs at the electric load 44b, the fault detector 11 cannot detect the presence of the fault when the branch switch 63b is in the open state, but can detect the presence of the fault when the branch switch 63b is in the close state. In short, the fault detector 11 cannot detect the fault when the first switch 61 is in the close state and the branch switch 63b is in the open state, but can detect the fault when the first switch 61 and branch switch 63b are in the close state. The fault specifier 121 can judge that the occurrence position of the fault is at the electric load 44b based on the aforementioned results.

In this case, the fault can be stopped by operating the branch switch 63b in the open state. The controller 12A may therefore operate the first and second switches 61 and 62 and branch switches 63a and 63c in the close state and also operate only the branch switch 63b in the open state. The electric load 44b causing the fault can be disconnected from the conductor path 7B with power transmitted between the electric loads 44a and 44c and both the utility grid 3 and storage battery 21.

Note that the combinations and order for controlling the open and close states of the first and second switches 61 and 62 and each branch switch 63 so as to make different open-close state combinations of the first switch 61, second switch 62 and each branch switch 63 are not limited to the aforementioned description.

In the embodiment, the residual current protection device 1 includes the fault specifier 121 configured to specify an occurrence position of the fault. The controller 12A is configured to sequentially control the open and close states of the first and second switches 61 and 62 and each branch switch 63 so as to make different open-close state combinations of the first switch 61, second switch 62 and each branch switch 63 when the fault detector 11 detects the occurrence of the fault. The fault specifier 121 is configured to specify the occurrence position of the fault based on the open-close state combinations of the first switch 61, second switch 62 and each branch switch 63 and the detection result by the fault detector 11.

In the case where the specified occurrence of the fault can be disconnected from the conductor path 7B, it is possible to continue to transmit power between electric loads 44 and both the utility grid 3 and the storage battery 21.

The embodiment may be further configured to notify a user of the occurrence position of the fault specified by the fault specifier 121 through a notification device (not shown) composed of, for example a monitor or the like. The user can accordingly recognize the occurrence position of the fault. Accordingly, when a fault occurs in, for example the electric load 44b, it is possible to induce the user not to use the electric load 44b. When a fault occurs in the conductor path 7B, it is possible to induce the user to ask a contractor the repair.

In the embodiment, an enclosure of the power conversion device 5 may be electrically connected to the earthing conductor 73 with the enclosure of the power conversion device 5 and earth electrically connected via the earthing conductor 73 (see FIG. 6). One earthing conductor 73 can be shared between earthing for detecting the occurrence of a fault and protective earthing of the enclosure of the power conversion device 5.

In the examples of the embodiment, each electric load 44 is comprised of a load configured to operate by power, but an electric load(s) 44 may be comprised of a dispersed power source(s) (e.g., a storage battery, photovoltaic power system or the like) configured to generate power. In the case where an electric load 44 is comprised of a dispersed power source, a corresponding power converter 81 may be composed of, for example an AC-DC converter circuit.

While the foregoing has described what are considered to be the best mode and/or other examples, it is understood that various modifications may be made therein and that the subject matter disclosed herein may be implemented in various forms and examples, and that they may be applied in numerous applications, only some of which have been described herein. It is intended by the following claims to claim any and all modifications and variations that fall within the true scope of the present teachings.

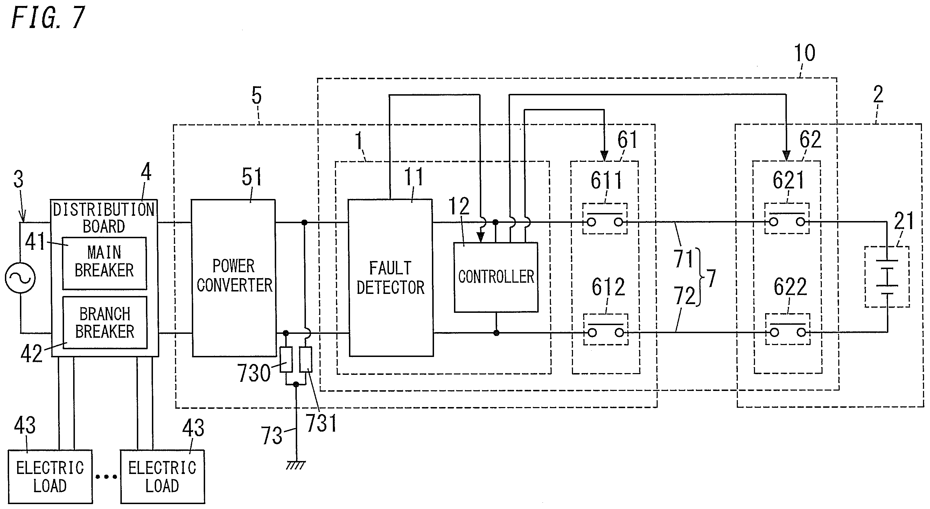

As shown in FIG. 7 as a modified example of FIG. 1 and the like, the high potential side conductor 71 may be also electrically connected to earth via an impedance circuit 731 and the earthing conductor 73. For example, the impedance circuit 731 is a high impedance resistor. Desirably, it is a resistor of 40kΩ or more. In the example of FIG. 7, a series circuit of the impedance circuits 730 and 731 is electrically connected between the high potential side conductor 71 and low potential side conductor 72, and a junction of the impedance circuits 730 and 731 is electrically connected to earth via the earthing conductor 73. In this example, the fault detector 11 may be a current sensor provided between earth and the junction of the impedance circuits 730 and 731. The current sensor may be a current transformer.

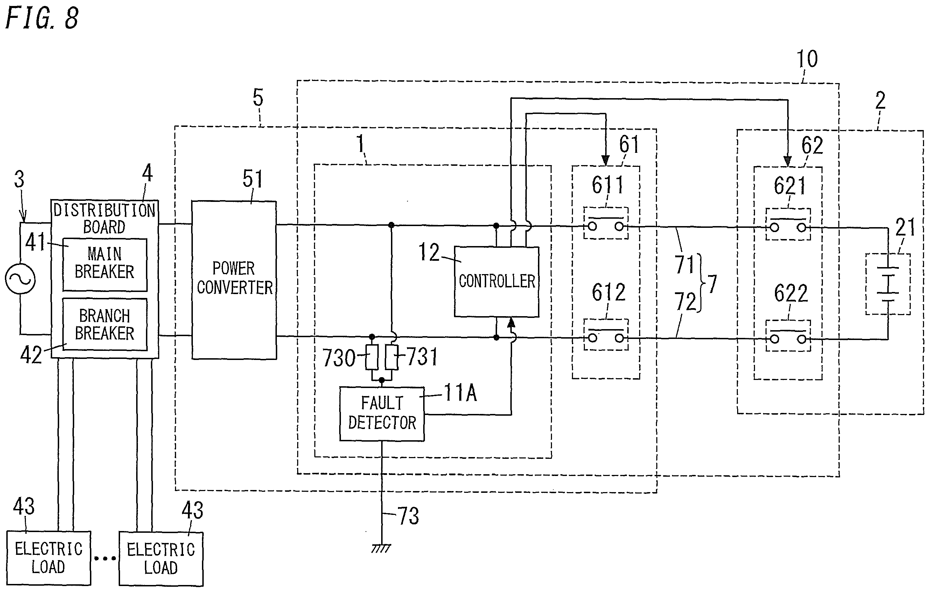

As shown in FIG. 8 as a modified example of FIG. 4, the high potential side conductor 71 may be also electrically connected to earth via an impedance circuit 731, the fault detector 11A and the earthing conductor 73. For example, the impedance circuit 731 is a high impedance resistor. Desirably, it is a resistor of 40kΩ or more. In the example of FIG. 8, a series circuit of the impedance circuits 730 and 731 is electrically connected between the high potential side conductor 71 and low potential side conductor 72, and a junction of the impedance circuits 730 and 731 is electrically connected to earth via the fault detector 11A and the earthing conductor 73. In other words, the junction is electrically connected to the earthing conductor 73 via the fault detector 11A. In this example, the fault detector 11A may be a current detector such as a current transformer.

In an example of FIG. 7 or 8, when a fault occurs on a side of a high potential side conductor 71, a leakage current flows out via the occurrence position of the fault and flows back into a low potential side conductor 72 via an earthing conductor 73 and an impedance circuit 730 (see FIGS. 2 and 3). When a fault occurs on a side of a low potential side conductor 72, leakage current flows out via an impedance circuit 731 and an earthing conductor 73, and flows back into a low potential side conductor 72 through the occurrence position of the fault.

## Claims

1. A residual current protection device, comprising:
a fault detector configured to detect occurrence of a fault in a conductor path that allows power to be transmitted between a storage battery and an utility grid; and
a controller configured to control open and close states of each of a first switch in the conductor path and a second switch on a nearer side to the storage battery than the first switch in the conductor path based on a detection result by the fault detector, the controller being configured to: when the fault detector detects occurrence of the fault during charging of the storage battery, operate at least the first switch of the first and second switches in an open state; and when the fault detector detects the occurrence of the fault during discharging of the storage battery, operate at least the second switch of the first and second switches in an open state.

2. The residual current protection device of claim 1, wherein the controller is configured to operate the first and second switches sequentially in the open state, when the fault detector detects occurrence of a fault.

3. The residual current protection device of claim 2, wherein the controller is configured to: when the fault detector detects the occurrence of the fault during charging of the storage battery, operate the first switch in the open state to then operate the second switch in the open state; and when the fault detector detects the occurrence of the fault during discharging of the storage battery, operate the second switch in the open state to then operate the first switch in the open state.

4. A residual current protection device of any one of claims 1 to 3, wherein:
the conductor path forms a main circuit that allows the storage battery to be electrically connected to the utility grid, and one or more branch circuits which branch off the main circuit and each of which allows one or more electric loads to be electrically connected to;
the first switch is provided in the main circuit;
the second switch is provided on a nearer side to the storage battery than the first switch in the main circuit; and
the controller is further configured to control open and close states of one or more branch switches in the one or more branch circuits.

5. The residual current protection device of claim 4, comprises branch circuits as the one or more branch circuits, wherein
the controller is configured to operate the second switch and a specified branch switch of respective branch switches in the branch circuits in the close state, when power from the utility grid is lost.

6. The residual current protection device of claim 5, wherein the controller is configured to operate the second switch and all the branch switches in the open state if the fault detector detects the occurrence of the fault when the power from the utility grid is lost.

7. A residual current protection device of any one of claims 4 to 6, further comprising a fault specifier configured to specify an occurrence position of the fault, wherein:
the controller is configured to, when the fault detector detects the occurrence of the fault, sequentially control open and close states of each of the first and second switches and the one or more branch circuits so as to make different open-close state combinations of the first switch, the second switch and the one or more branch circuits; and
the fault specifier is configured to specify the occurrence position of the fault based on the detection result by the fault detector and the open-close state combinations of the first switch, the second switch and the one or more branch circuits.

8. A residual current protection device of any one of claims 1 to 7, wherein the fault detector is configured to detect the occurrence of the fault in the conductor path based on current flowing through an earthing conductor that electrically connects the conductor path and earth.

9. A residual current protection system, comprising:
a residual current protection device of any one of claims 1 to 8;
the first switch in the conductor path; and
the second switch on the nearer side to the storage battery than the first switch in the conductor path.

10. A residual current protection system, comprising:
a residual current protection device of any one of claims 4 to 7;
the first switch in the main circuit;
the second switch on the nearer side to the storage battery than the first switch in the main circuit; and
a power converter that is configured to be electrically connected between the utility grid and the electric load and that is configured to convert supply power from the utility grid into another power to be supplied to the electric load.
